# EUROPEAN PATENT SPECIFICATION

(11) **EP 3 490 385 B1**
(45) Date of publication and mention of the grant of the patent: **07.06.2023**
(21) Application number: 17833618.6
(22) Date of filing: 08.05.2017
(51) Int. Cl.: A22C 25/16

(54) **PRE-RIGOR AND FRESH FISH PIN BONE REMOVAL APPARATUS**
VORRICHTUNG ZUR ENTFERNUNG VON GRÄTEN VOR DER TOTENSTARRE UND BEI FRISCHEM FISCH
APPAREIL DE RETRAIT D'ARÊTE INTRAMUSCULAIRE DE POISSON FRAIS ET AVANT RIGIDIFICATION

(30) Priority: 29.07.2016 DK 201600456
(43) Date of publication of application: 05.06.2019
(73) Proprietor: Pescatech ApS, 6700 Esbjerg (DK)
(72) Inventor: BJERREGAARD, Chris, 6715 Esbjerg N (DK); CHRISTENSEN, Thorkild Ellekrog, 9380 Vestbjerg (DK); PETERSEN, Poul, 8500 Grenaa (DK)
(74) Representative: Kanved, Nicolai
(86) International application number: PCT/DK2017/050148
(87) International publication number: WO 2018/019344

(56) References cited:
- EP-A1- 1 284 604
- EP-A1- 2 531 038
- WO-A2-2016/008926
- DE-B3-102015 111 448
- GB-A- 1 513 243
- JP-A- 2002 238 445
- NO-A- 754 047
- NO-B1- 335 377
- US-A- 4 219 907
- US-B1- 6 280 313

## Description

### Field of the Invention

The present invention relates to an pre-rigor and fresh fish pin bone removal apparatus, for removing pin bones in fish flesh, where the pre-rigor and fresh fish pin bone removal apparatus comprises at least a conveyor, a temperature manipulation unit and a pin bone removal unit, where the temperature manipulation unit is followed by the pin bone removal unit and where the temperature manipulation unit is configured to conduct a controlled heating of fish flesh.

### Background of the Invention

The invention is targeting to solve a puzzle, which has until now remained unsolved. Conventional methods have over numerous attempts proven to be unsuccessful on especially fresh fish fillets, where bones and skin and flesh are firmer.

The removal of the pin bones is a critical part of processing fresh fish, where present technology has of yet not achieved noticeable success on pre-rigor fillets no matter the specie.

Before the development of the present invention, it has been known to remove pin bones in the following ways:
1) Manually, where operators have small tools to pick the bones from the flesh,
2) Semi-automatic, where a handheld rotating shredded drum is positioned to rip the bones from the flesh,
3) Automatic, where a conveyor takes the fish through one or more fixed rotating drums.

One of the disadvantages of these methods is that they have not worked properly on fresh (pre-rigor) fish fillets; where the firm flesh and bone fasten to the skin make this impossible without damaging the flesh.

Another one of the disadvantages of these methods is thus, that it is possible only to work properly with post rigor fish, where time and temperature have resulted in a maturing/softening process, which has made the flesh tender.

Examples of prior art technologies are discussed briefly below.

DE102015111448 discloses device comprising clamping jaws, where the clamping jaws (are designed and arranged so that they can be moved toward and away from each other, and a drive is designed and arranged to exert an oscillating rotational movement of the base body about an axis of rotation and thereby of the clamping jaws about the center axis M.

WO 2016/008926 A2 discloses a pin bone removal system adapted to automatically removing a pin bone area of a fresh fish fillet. The system comprises a conveyer, a pin bone removal unit (i.e. a cutting device) and a detector device (scanner) in front of the pin bone removal unit. The detector device is adapted to detect the position of the fish fillet and/or the cut pin bone area, and may comprise an X-ray device. Salmonids are not mentioned.

EP 253 1038 A1 discloses a system adapted to cut pin bones fully automatically from pre-rigor salmon fillets or white fish fillets. The system comprises conveyers, detection means, i.e. an X-ray machine, which captures an image of the fillet as well as the precise location of the bones in the fillet, a vision unit used to capture one or more of the following: a silhouette image, a full-colour image and a full 3D scan image; and a cutting unit, e.g. on a robotic arm.

EP 1284644 A1 discloses a method for removing pin bones from the fish meat parts before resolution of rigor. This is done by detecting the position of the pin bones in the fish, e.g.by image analysis, fluorescence techniques, near infrared spectroscopy (NIR) or infrared spectroscopy (IR). The pin bones can then be separated from the fish part by conventional methods, e.g. dragging or pulling the row of pin bones from the fish meat and thereby only removing a minimum of fish meat with the pin bones.

GB 1513243 A discloses a method for filleting fish (removing pin bones) using heat, such as steam, in a localised treatment to the skin side of the fish along a zone, usually a narrow strip where the pin bones are connected to the fish skin, thereby weakening or destroying the skin connection.

US 6280313 B1 discloses a catfish filleting machine comprising one or more nozzles that can be used to provide a water spray to cleanse the cutter from any remaining fin/bone debris such that the cutter is self-cleaning between each filleting procedure.

WO 99/52375 A discloses method and apparatus for removing bones from meat, such as pin-bones from fish fillets, especially from white fish, such as cod. The apparatus comprises a conveyor for transporting the meat and a bone removing unit for removing the bones as the meat is transported along the conveyor. The bone removing unit is movably hinged to the frame of the apparatus and moveable in an approximated up- and downward direction toward the conveyor. The conveyor comprises an upwardly extending edge allowing the bone removal unit to be brought into contact with a particular area to remove the bones. In this manner it is possible to adjust the apparatus according to each individual fish fillet.

WO 02/43502 A discloses an apparatus for detection and removing of unwanted material from workpieces. A conveyor moves a workpiece past an x-ray source to detect existence and location of the undesirable material included in the workpiece, such as bones, fat, metal, etc. Thereafter, the conveyor carries the workpiece further, wherein a cutter removes segments of meat, which contain the detected undesirable material from the workpiece. The undesirable material is thus removed from the workpiece in a segmented portion having a visually recognizable shape, such as square, round, triangular, etc. A worker stationed downstream of the cutter along the conveyor may then easily spot the segmented portion in a recognizable shape and remove the unwanted segmented portion from the conveyor, while leaving the rest of the workpiece on the conveyor for further processing.

### Object of the Invention

The object of this invention is to provide an pre-rigor and fresh fish pin bone removal apparatus of the type mentioned in the introduction which changes the prior art methods by adding both intelligence, individuality and targeted temperature manipulation to the process.

It is a further object of the invention to make it possible to provide a pin bone removal apparatus which is able to bring the processing window from present up to 3 days maturing down to no maturing needed. The method is also capable of improving skinning process.

It is another object of the invention to change the markets substantially, so that distribution chains and processing plants will change in order to finish the products as close to live state as possible. This again will bring fresh and firmer fish products to market, with significant impact on price and quality on salmonid species.

It is thus an object of the invention to significant improve todays fillet and further value added products.

In yet another object of the invention it is furthermore possible to add cold air during process of fillets, so outside the pre-rigor and fresh fish pin bone removal apparatus temperature can be higher without damaging the sensible fillet products.

### Description of the Invention

According to a first aspect of the invention, the above object is achieved with an pre-rigor and fresh fish pin bone removal apparatus of the type mentioned in the introduction, where an pre-rigor and fresh fish pin bone removal apparatus, for removing pin bones in fish fillets of salmonid fish, where the pre-rigor and fresh fish pin bone removal apparatus comprises, according to independent claim 1, at least a conveyor, a pin bone removal unit comprising at least one rotating drum configured to pull out pin bones from the fillets, where the pin bone removal unit comprises at least one pull mechanism arranged on at least one arm, and where the at least one arm has a number of flexibly positioning means and the at least one pull mechanism comprises the at least one rotating drum. The apparatus further comprises a temperature manipulation unit, where the temperature manipulation unit is followed by the pin bone removal unit, and where the temperature manipulation unit is configured to conduct a controlled heating of at least one selective area of the salmonid fish fillets to tenderize the meat around the pin bones. The controlled temperature manipulation unit may comprise either a microwave unit or an infrared unit or a laser unit or a steam injection unit or a hot water injection unit. The apparatus further comprises a combination scanner at least in from of the temperature manipulation unit or the pin bone remvcal unit, where the combination scanner comprises at least a positioning unit to locate the fillets position on the conveyor and a bone detection unit for detecting at least one selective area of the salmonid fish fillet with pin bones.

This makes it possible to target the temperature manipulation to the process and to make it possible to provide a pin bone removal apparatus which is able to bring the processing window from present up to 3 days maturing down to no maturing needed.

It also makes it possible to finish the products as close to live state as possible, which includes pin bone removal and skinning.

The temperature manipulation unit is followed by the pin bone removal unit which could further be followed by a skinning machine or alternatively could a skinning machine follow after the temperature manipulation unit and before the pin bone removal unit. Both options are possible due to the fact that the skinning process becomes easier after the temperature manipulation unit.

The process that makes it possible can be summarized as a procedure, where:
1. The temperature manipulation unit conduct a tendering process through targeted heating of bone roots and
2. The pin bone removal unit adjust to the individual fillets

This can be done by letting the fillets pass through a controlled microwave or controlled infrared tunnel either in step or in a flow. The flesh will heat up the fastest, where the fat layer is thick and bones are fastened to the skin. The temperature control ensures, that it will only allow the area to tender and not the fillet to cook, hence a controlled heating of at least one selective area of the fish.

With laser technology it is also possible to heat up the flesh, where the fat layer is thick and bones are fastened to the skin area, thus a controlled heating of at least one selective area.

With steam or hot water injection inserted at the area where the bone roots are fastened, it is also possible to make a controlled area heating. With a controlled area heating it is possible to tenderize the meat around the bones, the bone roots or at the bone area, whereby the bones are much easier to remove with the pin bone removal apparatus.

It is possible to inject the steam or hot water into the meat by means of a unit with a number of needles, where the needles are hollow and are functioning as syringes. Options are one, two or many needles. The steam or hot water is then added when the needles are injected into the meat around the bones and/or the bone roots. This operation can be done very precisely if combined with a robot.

By a pre-rigor and fresh fish pin bone removal apparatus is meant a single unit machine or a combination of units working together one after another in a line, thus in-line. The conveyor is preferably a single conveyor that transports the fish through the entire pre-rigor and fresh fish pin bone apparatus such that the fish do not change its position between the units of the pre-rigor and fresh fish pin bone apparatus. Alternatively it could be a number of conveyors as long as the fish do not change its position.

The conveyor is able to move the fillets forward in a flow, where it is understood that a flow is both considered to be controllable steps or forward continuous movement, where the fillets are in motion at both steps/movement.

The temperature manipulation unit is able to work from any side of the fish, whether that may be from above, below, front, back or from the sides. Furthermore is it able to work from at least one angle, where it by angle is meant angle in relation to the surface of the fish.

For the pre-rigor and fresh fish pin bone removal apparatus to be able to work at all it is preferably driven by electricity.

Preferably, at least the laser unit or the injection unit further comprises a laser tool arranged at a robotic arm.

This makes it possible to precisely pinpoint the position, distance and angle of the laser in relation to the fillet.

In a preferred embodiment is the robotic arm part of a flexpicker robot. In an alternative embodiment another type of robot could be used. It is also possible to have the laser perform a certain system of movements, whether that is in a tilted angle, zigzag, from side to side or other patterns or movements.

Alternatively, the temperature manipulation unit is a steam injection unit or a hot water injection unit on which injection needles are arranged and where the injection unit is mounted on a robot arm.

In a preferred embodiment are servo motors as rotary or linear actuators used due to their ability to conduct precise control of positions, angularly or linearly. Servo motors also have the ability to control velocity as well as acceleration.

According to the invention, the pin bone removal apparatus comprises a combination scanner at least in front of the pin bone removal unit, where the combination scanner comprises at least a positioning unit to locate the fillets position on the conveyor and a bone detection unit.

This makes it further possible to provide a pin bone removal apparatus with intelligence and individuality. The fillets will pass through the combination scanner, which can measure the individual fillets as they pass through.

This makes it further possible to follow a procedure, where:
1. The combination scanner conduct a position, surface and bone detection by combining scanning methods
2. The temperature manipulation unit conduct a tendering process through targeted heating of bone roots and
3. The pin bone removal unit adjust to the individual fillets

Where a microwave tunnel is the temperature manipulation unit, the following procedure is also possible:
1. The temperature manipulation unit conduct a tendering process through targeted heating of bone roots,
2. The combination scanner conduct a position and bone detection by combining scanning methods, and
3. The pin bone removal unit adjust to the individual fillets

The latter is due to the fact that the microwave unit also is able to operate without the scanner.

When using the scanner, the fillets are then detected in terms of their location on the conveyor and the bones detected, where after tendering process is activated. This is done by manipulating the temperature, where especially the bones are fastened.

This can be done by letting the fillets pass through a controlled microwave chamber either in step or in a flow. The flesh will heat up the fastest, where the fat layer is thick and bones are fastened to the skin. The temperature control ensures, that it will only allow the area to tender and not the fillet to cook.

This can also be done by letting the fillets pass through a laser unit, where laser technology makes it possible by using the information from the scanner to heat up specific area and depth according to the fillets surface with laser precision.

The pre-rigor and fresh fish pin bone removal apparatus could be three individual machines, but functions could be within one machine frame as well.

Preferably, the positioning unit is a 3D surface scan unit and the bone detection unit is an x-ray unit.

This makes it possible to measure the individual fillets as they pass through the combination scanner by means of a 3D surface scan unit to detect the shape of the fillets and an x-ray unit to detect inside bone position and the angle of the bones within the fillets.

Preferably, the positioning unit is a 3D surface scan unit and the bone detection unit is a MR- scanning unit.

This makes it possible to measure the individual fillets as they pass through the combination scanner by means of a 3D surface scan unit to detect the shape of the fillets and an MR- scanning unit to detect inside bone position and the angle of the bones within the fillets.

According to the invention, the pin bone removal unit comprises at least one pull mechanism arranged on at least one arm, where the at least one arm has a number of flexibly positioning means.

This makes it possible to pull the bones after the tendering process, since the bones have now lost their grip and can then be pulled with less or no damage to the flesh. In order to improve the result, intelligent pin bone pulling is used, where:
a. The position of individual fish and its bones + surface structure is tracked through to the pulling area
b. The pull mechanism, which is arranged on at least one arm, where the at least one arm has a number of flexibly positioning means, which then optimizes the picking angle.
c. Each fillet is unique and the pull mechanism adapts all angles, speed accordingly, which will secure "straight" pulling from optimized angles.

The pin bones are exposed from the vertebra after filleting but piece of cartilage fastens this to the skin.

By the expression a number of positioning means is meant at least one of a linear movement of the arm, a rotating movement around the axes of the arm or around a swivel at the end of the arm where the axis of the swivel is at least parallel to the axis of the arm. It could likewise be a rotating movement around a swivel at the end of the arm where the axis of the swivel is different from parallel to the axis of the arm, preferably perpendicular to the axis of the arm.

Preferably telescopic coaxial axis are used as well as swivels, however other construction means could just as well be used to conduct the same kind of movements.

According to the invention, the pull mechanism comprises at least one rotating drum.

This makes it possible to remove pin bones through flexible and maneuverable rotator heads adjusted to the individual fillets.

According to the invention, the rotating drum is intended to roll over the fillets where the pin bones are placed.

After the tendering process the bones have lost their grip and can then be pulled with less or no damage to the flesh. In order to improve the result intelligent pin bone pulling is used, where:
a. The position of individual fish and its bones + surface structure is tracked through to the pulling area
b. The rotating drums have servo motors and have full arm wrist flexibility, so that the rotator drum optimizes the picking angle.
c. Each fillet is unique and the pull mechanism adapts all angles, speed accordingly, which will secure "straight" pulling from optimized angles.

The pin bones are exposed from the vertebra after filleting but piece of cartilage fastens this to the skin.

Preferably, at least one of the temperature manipulation units, the pin bone removal unit or the combination scanner comprises cabinets with self-cleaning means.

This makes it possible to conduct a completely automatized inside cleaning of a single unit machine or the combination of several or all the individual machines connected and working together, where the machines comprises cabinets.

The uniqueness continues as a solution, where movable and fixed spray bars combined with a sloped bottom section is making it possible to make a complete internal wash down, which include a 360 degree belt and cabinet wash.

Preferably, the automated inside cleaning cabinets comprise moveable and/or fixed spray bars.

This makes it possible to choose the most optimal solution, whether that is moveable or fixed spray bars. It also makes it possible to choose a combination of movable or fixed spray bars. One cabinet might require one solution, another cabinet another. Though preferably, all cabinets comprise the same solution.

Preferably, the automated inside cleaning cabinets further comprise a sloped bottom section.

This makes it possible to get the water and other liquids used for cleaning out of the cabinets. In one embodiment is the bottom sloped to one end of the cabinet, in another embodiment to the other end or in a third embodiment at the bottom centre of the cabinet.

The invention could be a single unit machine or a combination from three individual machines working together. The machine frames and cabinets are made to connect with each other and allow for completely automatized inside cleaning. Movable and fixed spray bars combined with a sloped bottom section is making it possible to make a complete internal wash down.

The invention also includes or at least could include a system for control- and regulating the apparatus comprising different technical items, such as for example microprocessors, sensors, timers, motors and actuators, which are not all described in the specification, but as one of ordinary skill will recognize necessary to the invention, to make it function properly.

### Description of the Drawing

The invention will be described in further detail below by means of non-limiting embodiments with reference to the drawing, in which:
Figure 1 shows a manually method of prior art
Figure 2 shows a semi-automatic method of prior art
Figure 3 shows an automatic method of prior art
Figure 4 shows a pre-rigor and fresh fish pin bone removal apparatus, in closed position
Figure 5 shows a pre-rigor and fresh fish pin bone removal apparatus comprising a microwave unit/an infrared unit, in open position
Figure 6 shows a pre-rigor and fresh fish pin bone removal apparatus comprising a laser unit, in open position
Figure 7 shows a combination scanner
Figure 8a-8c shows surface and bone scanning
Figure 9 shows a microwave unit/infrared unit
Figure 10 shows microwaves
Figure 11 shows the "Thermal mode" with depth impact shown as "sinus heat curves"
Figure 12 shows a laser
Figure 13 shows a laser beam from tool
Figure 14 shows the "Thermal mode" sinus heat curves
Figure 15 shows a pin bone removal unit
Figure 16a-16c shows a salmon fillet with bone structure
Figure 17a-17c shows the flexibly positioning means of the pull mechanism of the pin bone removal unit
Figure 18a-18c shows that the pull mechanism matches the fillet structure
Figure 19 shows a pre-rigor and fresh fish pin bone removal apparatus, in open position where the means for easy cleaning is shown
Figure 20 shows a steam injection unit/ a hot water injection unit.
Figure 21 shows a unit of needles

The figures shown illustrates salmon, however the invention can be handling other kinds of individual fish as well.

In the description of the figures, identical or corresponding elements will be designated by the same reference numerals in the various figures. Thus, there will not be given an explanation of all details in connection with each figure / embodiment.

In the drawing, the following reference numerals have been used for the designations used in the detailed part of the description:
- 1: Tool
- 2: Bone
- 3: Fish flesh
- 4: Handheld rotating shredded drum
- 5: Conveyor
- 6: Fish fillet
- 7: Automatic rotating drum
- 8: Pre-rigor and fresh fish pin bone removal apparatus
- 9: Direction of processing
- 10: Combination scanner
- 11: Temperature manipulation unit
- 12: Pin bone removal unit
- 13: Microwave unit
- 14: Laser unit
- 15: Cabinet
- 16: Hatch
- 17: Positioning unit
- 17a: 3D surface scan unit
- 18: Bone detection unit
- 18a: X-ray unit
- 18b: MR scanning unit
- 19: Microwave
- 20: Laser tool
- 21: Flex picker robot
- 22: Laser beam
- 23: Salmon
- 24: Backbone
- 25: Skin
- 26: Pull mechanism
- 27: Arm
- 28: Rotating drum
- 29: Linear movement
- 30: First rotating movement
- 31: First swivel
- 32: Second rotating movement
- 33: Second swivel
- 34: Automated inside cleaning cabinets
- 35: Spray bars
- 36: Sloped bottom section
- 37: Air, water, electricity connections
- 38: Water drain pipe
- 39: Infrared unit
- 40: Steam injection unit
- 41: Hot water injection unit
- 42: Unit of needles
- 42a: Needle

### Detailed Description of the Invention

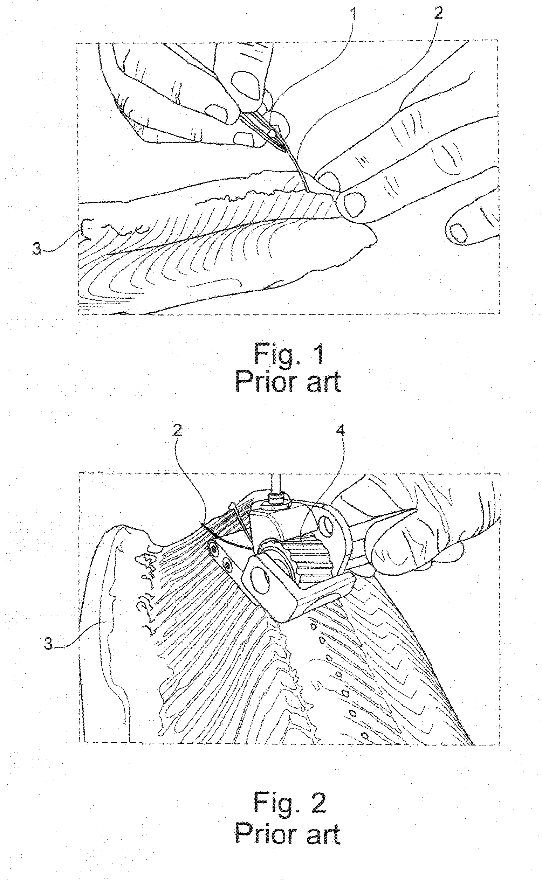

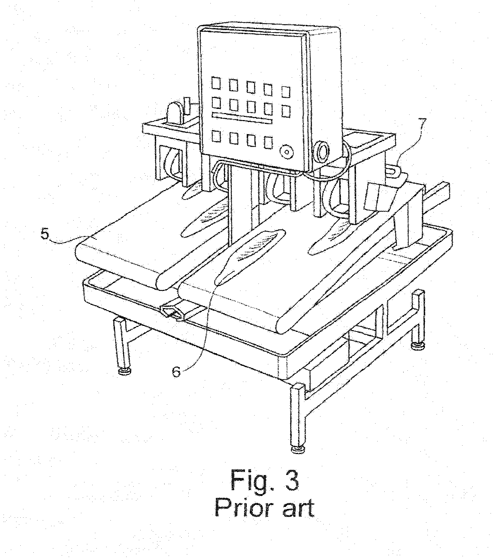

Figure 1 shows a manually method of prior art, where operators have small tools 1 to pick the bones 2 from the fish flesh 3. Figure 2 shows a semi-automatic method of prior art, where a handheld rotating shredded drum 4 is positioned to rip the pin bones 2 from the fish flesh 3. Figure 3 shows an automatic method of prior art, where a conveyor 5 takes the fish fillet 6 through one or more automatic rotating drums 7.

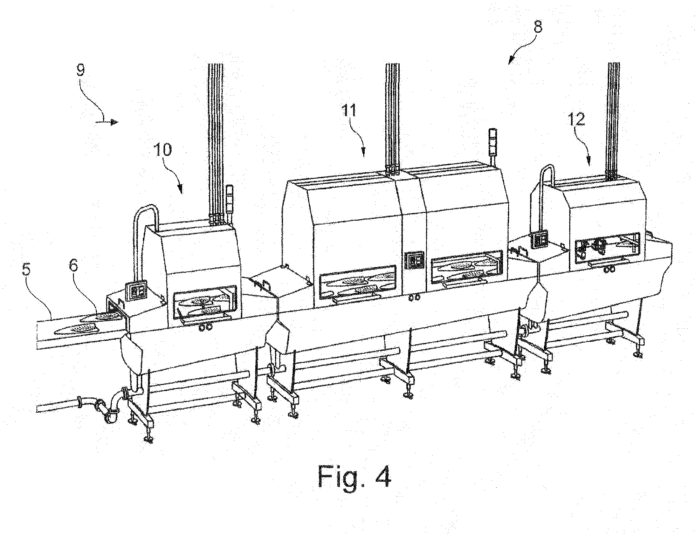

Figure 4 shows a pre-rigor and fresh fish pin bone removal apparatus 8, in closed position, where a conveyor 5 is transporting fish fillets 6 in the direction of processing 9. In the shown embodiment is a combination scanner 10 placed in front of a temperature manipulation unit 11 followed by a pin bone removal unit 12.

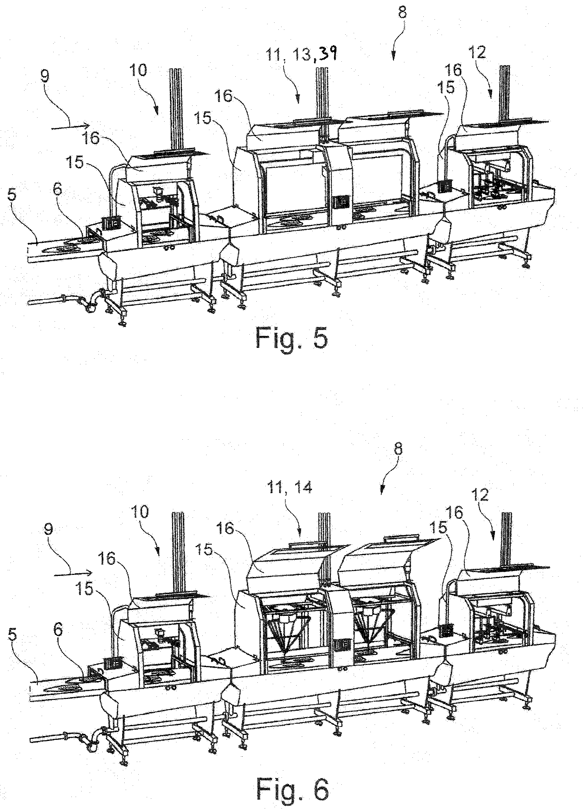

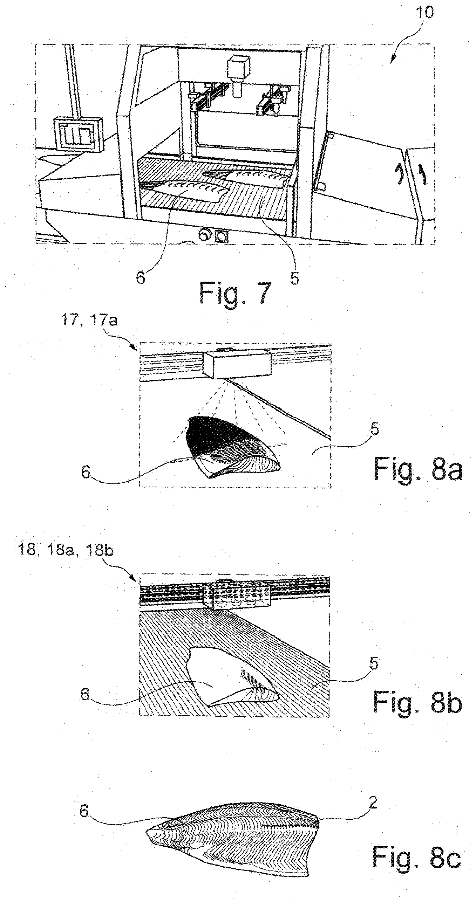

Figure 5 shows a pre-rigor and fresh fish pin bone removal apparatus 8 comprising a temperature manipulation unit 11 in terms of a microwave unit 13 or an infrared unit 39, in open position. Figure 6 shows a pre-rigor and fresh fish pin bone removal apparatus 8 comprising a laser unit 14, in open position. By open position is meant that the cabinet 15 has a hatch 16, a door or a similar device which can be opened and closed. Figure 7 shows a combination scanner 10. Figure 8a shows a 3D surface scanning of a fish fillet conducted by a positioning unit 17 in terms of a 3D surface scan unit 17a; figure 8b shows a bone scanning conducted by a bone detection unit 18 either in terms of an x-ray unit 18a or a MR scanning unit 18b. Figure 8c shows a fish fillet 6 with pin bones 2.

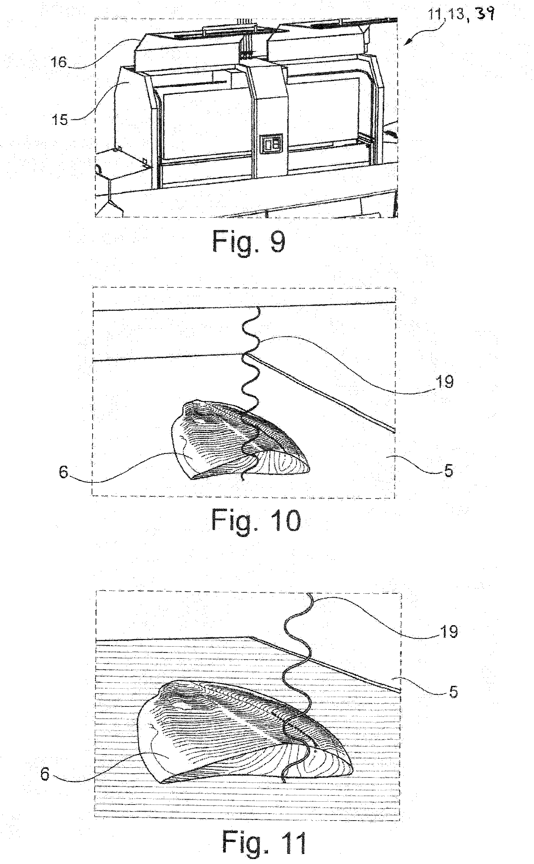

Figure 9 shows a temperature manipulation unit 11 in terms of a microwave unit 13 or an infrared unit 39, in open position. Figure 10 shows microwaves 19 (just one wave is shown as a sinus heat curve for illustration) from the microwave unit 13 that hit the fish fillet 6 whereby the tendering process is then activated. This is done by manipulating the temperature, where especially the bones are fastened. Fat is more aqueous than flesh or meat, which means that the fat becomes warmer before the meat when exposed for microwaves. Since the bones are fastened to the fat which again is fastened to the skin the coherence becomes weaker and the bones becomes thus easier to pull without damaging the flesh of the fish. Figure 11 shows the "Thermal mode" with depth impact.

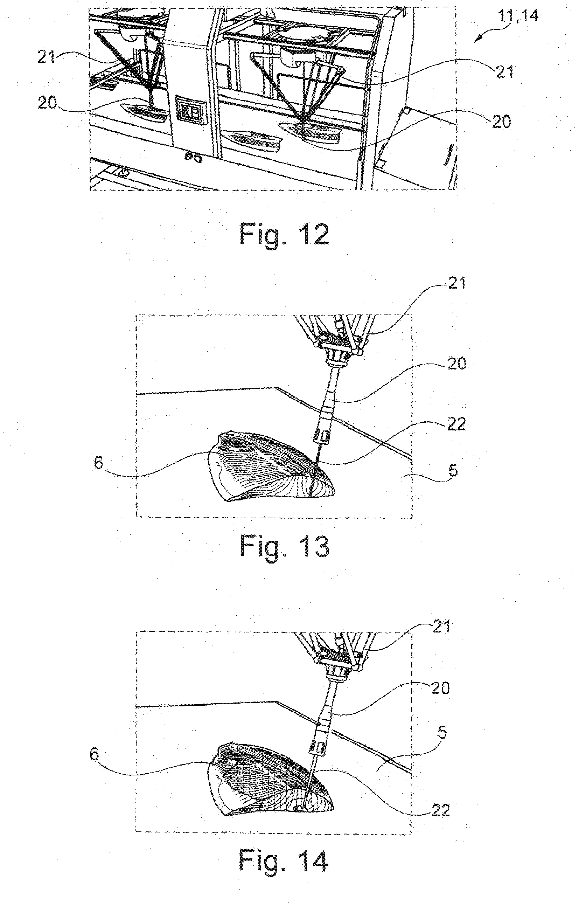

Figure 12 shows a laser unit 14, in open position where a laser tool 20 is mounted on a flex picker robot 21. Figure 13 shows a laser beam 22 from the laser unit 14, where the laser beam 22 hit the fish fillet 6 whereby the tendering process is then activated by manipulating the temperature, where especially the bones are fastened. With laser technology this can be done very precisely. Figure 14 shows the "Thermal mode".

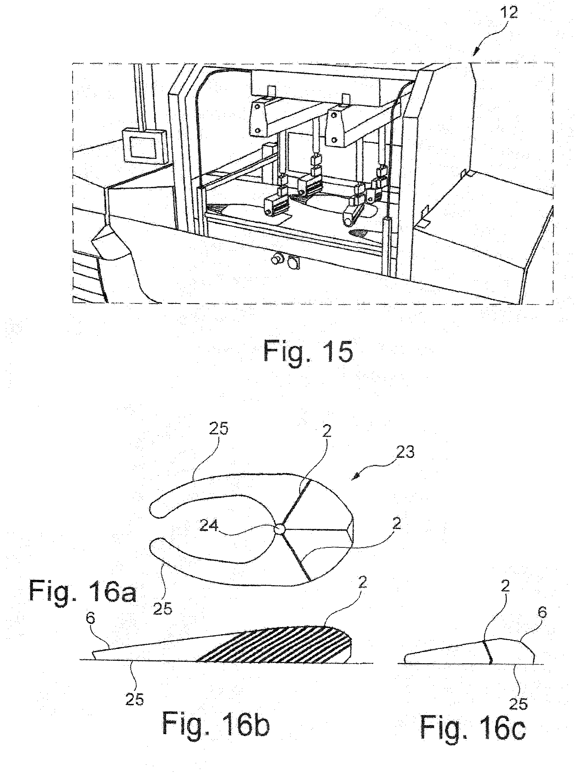

Figure 15 shows a pin bone removal unit 12.

Figure 16a shows a salmon 23 in cross section with its bone structure comprising backbone 24 and pin bones 2. Figure 16b shows a fillet 6 with pin bones 2 in the lengthwise direction of the fish fillet 6 and figure 16c shows a fillet 6 with pin bones 2 in a cross section of the fish fillet 6. The pin bones 2 are exposed from the backbone 24 after filleting but piece of cartilage fastens the pin bones 2 to the skin 25.

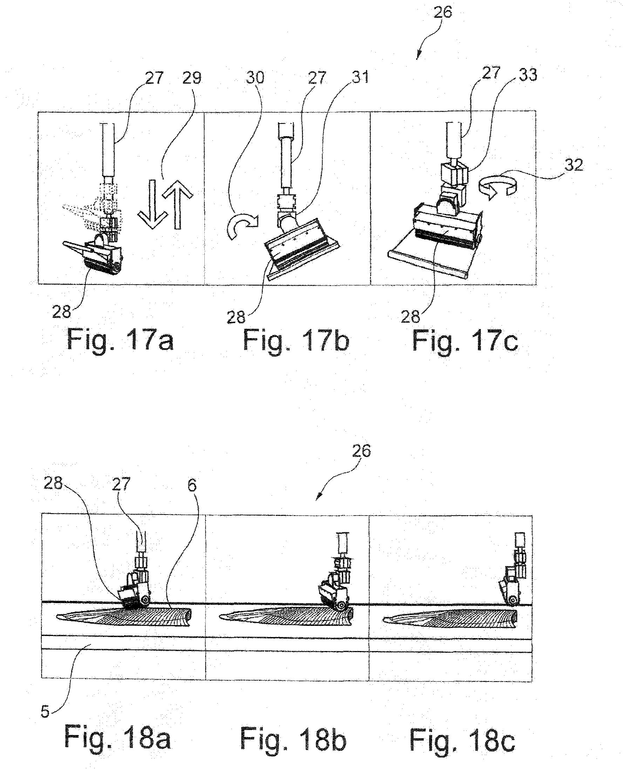

Figure 17a-c shows the flexibly positioning means of the pull mechanism 26 arranged on at least one arm 27 of the pin bone removal unit 12, which allows the pull mechanism 26 shown as a rotating drum 28 flexibly positioning means to optimize the picking angle. Figure 17a shows an example of a linear movement 29 of the arm 27, figure 17b an example of a first rotating movement 30 around a first swivel 31 at the end of the arm where the axis of the first swivel is at least parallel to the axis of the arm 27, figure 17c shows a second rotating movement 32 around a second swivel 33 at the end of the arm 27 where the axis of the second swivel 33 is different from parallel to the axis of the arm 27, preferably perpendicular to the axis of the arm 27. Figure 18a-c shows that the pull mechanism 26 matches the structure of the fillet 6.

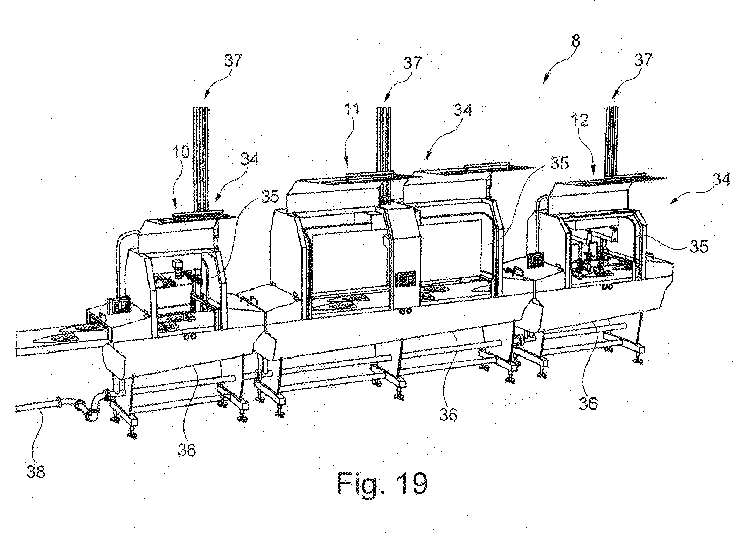

Figure 19 shows a pre-rigor and fresh fish pin bone removal apparatus 8, in open position where the means for easy cleaning is shown. This comprises automated inside cleaning cabinets 34 with moveable and/or fixed spray bars 35 as well as a sloped bottom section 36. Further are shown air, water and electricity connections 37 as well as the water drain pipe 38.

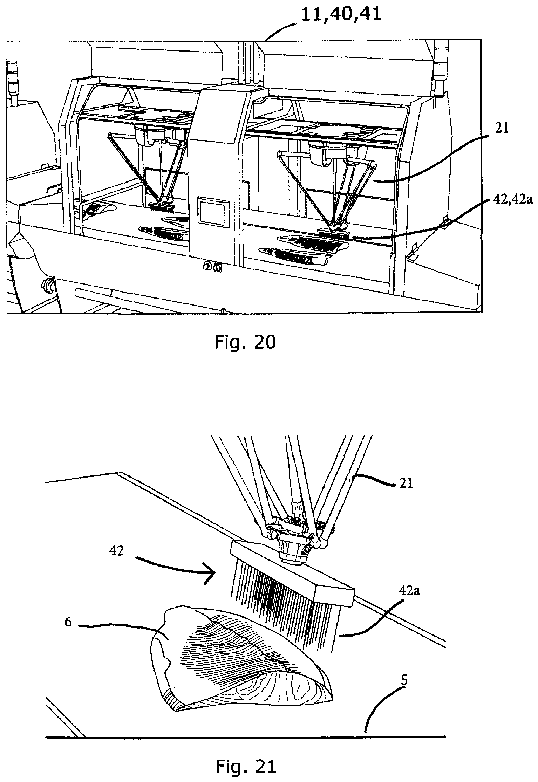

Figure 20 shows a temperature manipulation unit 11 in terms of a steam injection unit 40 or a hot water injection unit 41, in open position where needles 42a as a unit 42 is mounted on a flex picker robot 21.

Figure 21 shows a unit of needles 42, which could be one, two or many needles 42a, from the steam injection unit 40 or the hot water injection unit 41, where the needles 42a are intended to be injected into the meat around the bones and/or the bone roots within the fillet 6. With the injection of the needles 42 into the fillet 6 the tendering process by injecting steam or hot water through the needles 42 and into the meat is then activated by manipulating the temperature, where especially the bones are fastened.

## Claims

1. Pre-rigor and fresh fish pin bone removal apparatus (8) for removing pin bones (2) in fish fillets (6) of salmonid fish, where the pre-rigor and fresh fish pin bone removal apparatus (8) comprises at least a conveyor (5), and a pin bone removal unit (12) comprising at least one rotating drum (28) configured to pull out pin bones from the fillets (6), **characterized in that** the pin bone removal unit (12) comprises at least one pull mechanism (26) arranged on at least one arm (27), where the at least one arm has a number of flexibly positioning means (29,30,31,32,33) and the at least one pull mechanism (26) comprises the at least one rotating drum (28), and the apparatus (8) further comprises a combination scanner (10) before the pin bone removal unit (12), where the combination scanner (10) comprises at least a positioning unit (17) and a bone detection unit (18) for detecting at least one selective area of the salmonid fish fillet (6) with pin bones (2), and between the combination scanner (10) and the pin bone removal unit (12) the apparatus (8) comprises a temperature manipulation unit (11) configured to conduct a controlled heating of the at least one selective area of the salmonid fish fillet (6) to tenderize the meat around the pin bones (2), thereby enabling pin bone removal by the at least one rotating drum of a pre-rigor and fresh fish.

2. Pre-rigor and fresh fish pin bone removal apparatus according to claim 1, **characterized in that** the controlled temperature manipulation unit (11) comprises either a microwave unit (19) or an infrared unit (39) or a laser unit (20) or a steam injection unit (40) or a hot water injection unit (41).

3. Pre-rigor and fresh fish pin bone removal apparatus according to claim 1 or 2, **characterized in that** the temperature manipulation unit (11) is a steam injection unit (40) or a hot water injection unit (41) on which injection needles (42, 42a) are arranged and where the injection unit (40, 41) is mounted on a robot arm (21, 27).

4. Pre-rigor and fresh fish pin bone removal apparatus according to any of claims 1 to 3, **characterized in that** the positioning unit (17) is a 3D surface scan unit (17a) and that the bone detection unit (18) is an x-ray unit (18a).

5. Pre-rigor and fresh fish pin bone removal apparatus according to any of claims 1 to 3, **characterized in that** the positioning unit (17) is a 3D surface scan unit (17a) and that the bone detection unit (18) is a MR- scanning unit (18b).

6. Pre-rigor and fresh fish pin bone removal apparatus according to any of the claims 1 to 5, **characterized in that** at least one of the temperature manipulation unit (11), the pin bone removal unit (12) or the combination scanner (10) comprises cabinets (15, 34) with self-cleaning means.

7. Pre-rigor and fresh fish pin bone removal apparatus according to claim 6, **characterized in that** the automated inside cleaning cabinets (15, 34) comprises moveable and/or fixed spray bars (35).

8. Pre-rigor and fresh fish pin bone removal apparatus according to any of the claims 6 to 7, **characterized in that** the automated inside cleaning cabinets (15, 34) further comprises a sloped bottom section (36).

9. Pre-rigor and fresh fish pin bone removal apparatus according to any of the claims 1 to 8, **characterized in that** the conveyor (5) is configured to move the fillets (6) forward in a flow, where it is understood that a flow is both considered to be controllable steps or forward continuous movement, where the fillets are in motion at both steps/movement.

10. Pre-rigor and fresh fish pin bone removal apparatus according to any of the claims 1 to 9, **characterized in that** the temperature manipulating unit (11) is configured to conduct a controlled heating from any side of the fillet (6) selected from above, below, front, back or from the sides of the fillet (6).

11. Pre-rigor and fresh fish pin bone removal apparatus according to any of the claims 1 to 10, **characterized in that** the temperature manipulating unit (11) is configured to conduct a controlled heating from at least one angle in relation to the surface of the fillet (6).

## Patentansprüche

1. Einrichtung zum Entfernen von Stehgräten (8) vor der Totenstarre und bei frischem Fisch zum Entfernen von Stehgräten (2) in Fischfilets (6) von Salmoniden, wobei die Einrichtung zum Entfernen von Stehgräten (8) vor der Totenstarre und bei frischem Fisch mindestens einen Förderer (5) und eine Stehgräten-Entfernungseinheit (12) umfasst, die mindestens eine Drehtrommel (28) umfasst, die konfiguriert ist, um Stehgräten aus den Filets (6) zu ziehen, **dadurch gekennzeichnet, dass** die Stehgräten-Entfernungseinheit (12) mindestens einen Ziehmechanismus (26) umfasst, der auf mindestens einem Arm (27) angeordnet ist, wobei der mindestens eine Arm eine Anzahl an sich flexibel positionierenden Mitteln (29, 30, 31, 32, 33) aufweist, und der mindestens eine Ziehmechanismus (26) die mindestens eine Drehtrommel (28) umfasst, und die Einrichtung (8) weiter einen Kombileser (10) vor der Stehgräten-Entfernungseinheit (12) umfasst, wobei der Kombileser (10) mindestens eine Positionierungseinheit (17) und eine Grätenerkennungseinheit (18) zum Erkennen von mindestens einem selektiven Bereich des Salmonidenfilets (6) mit Stehgräten (2) umfasst, und die Einrichtung (8) zwischen dem Kombileser (10) und der Stehgräten-Entfernungseinheit (12) eine Temperaturmanipulationseinheit (11) umfasst, die konfiguriert ist, um ein gesteuertes Erwärmen des mindestens einen selektiven Bereichs des Salmonidenfilets (6) auszuführen, um das Fleisch um die Stehgräte (2) herum zart zu machen, wodurch das Entfernen der Stehgräte durch die mindestens eine Drehtrommel eines Fisches vor der Totenstarre und eines frischen Fisches ermöglicht wird.

2. Einrichtung zum Entfernen von Stehgräten vor der Totenstarre und bei frischem Fisch nach Anspruch 1, **dadurch gekennzeichnet, dass** die gesteuerte Temperaturmanipulationseinheit (11) entweder eine Mikrowelleneinheit (19) oder eine Infraroteinheit (39) oder eine Lasereinheit (20) oder eine Dampf-Injektionseinheit (40) oder eine Warmwasser-Injektionseinheit (41) umfasst.

3. Einrichtung zum Entfernen von Stehgräten vor der Totenstarre und bei frischem Fisch nach Anspruch 1 oder 2, **dadurch gekennzeichnet, dass** die Temperaturmanipulationseinheit (11) eine Dampf-Injektionseinheit (40) oder eine Warmwasser-Injektionseinheit (41) ist, auf der Injektionsnadeln (42, 42a) angeordnet sind, und wobei die Injektionseinheit (40, 41) auf einem Roboterarm (21, 27) montiert ist.

4. Einrichtung zum Entfernen von Stehgräten vor der Totenstarre und bei frischem Fisch nach einem der Ansprüche 1 bis 3, **dadurch gekennzeichnet, dass** die Positionierungseinheit (17) eine 3D-Oberflächen-Scaneinheit (17a) ist, und die Grätenerkennungseinheit (18) eine Röntgeneinheit (18a) ist.

5. Einrichtung zum Entfernen von Stehgräten vor der Totenstarre und bei frischem Fisch nach einem der Ansprüche 1 bis 3, **dadurch gekennzeichnet, dass** die Positionierungseinheit (17) eine 3D-Oberflächen-Scaneinheit (17a) ist, und die Grätenerkennungseinheit (18) eine MR-Scaneinheit (18b) ist.

6. Einrichtung zum Entfernen von Stehgräten vor der Totenstarre und bei frischem Fisch nach einem der Ansprüche 1 bis 5, **dadurch gekennzeichnet, dass** mindestens eines von der Temperaturmanipulationseinheit (11), der Stehgräten-Entfernungseinheit (12) oder dem Kombileser (10) Schränke (15, 34) mit Selbstreinigungsmitteln umfasst.

7. Einrichtung zum Entfernen von Stehgräten vor der Totenstarre und bei frischem Fisch nach Anspruch 6, **dadurch gekennzeichnet, dass** die automatisierten Innenreinigungsschränke (15, 34) bewegliche und/oder feste Sprühbalken (35) umfassen.

8. Einrichtung zum Entfernen von Stehgräten vor der Totenstarre und bei frischem Fisch nach einem der Ansprüche 6 bis 7, **dadurch gekennzeichnet, dass** die automatisierten Innenreinigungsschränke (15, 34) weiter einen abgeschrägten Bodenabschnitt (36) umfassen.

9. Einrichtung zum Entfernen von Stehgräten vor der Totenstarre und bei frischem Fisch nach einem der Ansprüche 1 bis 8, **dadurch gekennzeichnet, dass** der Förderer (5) konfiguriert ist, um die Filets (6) in einem Fluss vorwärts zu bewegen, wobei zu verstehen ist, dass ein Fluss sowohl als steuerbare Schritte als auch als kontinuierliche Vorwärtsbewegung zu verstehen ist, wobei die Filets bei beiden, Schritten/Bewegung, in Bewegung sind.

10. Einrichtung zum Entfernen von Stehgräten vor der Totenstarre und bei frischem Fisch nach einem der Ansprüche 1 bis 9, **dadurch gekennzeichnet, dass** die Temperaturmanipulationseinheit (11) konfiguriert ist, um eine gesteuerte Erwärmung von einer beliebigen Seite des Filets (6), ausgewählt aus oben, unten, vorne, hinten oder von den Seiten des Filets (6), durchzuführen.

11. Einrichtung zum Entfernen von Stehgräten vor der Totenstarre und bei frischem Fisch nach einem der Ansprüche 1 bis 10, **dadurch gekennzeichnet, dass** die Temperaturmanipulationseinheit (11) konfiguriert ist, um eine gesteuerte Erwärmung aus mindestens einem Winkel in Bezug auf die Oberfläche des Filets (6) durchzuführen.

## Revendications

1. Appareil de retrait d'arête de poisson frais et avant rigidification (8) pour retirer des arêtes (2) dans des filets de poisson (6) de salmonidés, où l'appareil de retrait d'arête de poisson frais et avant rigidification (8) comprend au moins un transporteur (5), et une unité de retrait d'arête (12) comprenant au moins un tambour rotatif (28) configuré pour extraire des arêtes à partir des filets (6), **caractérisé en ce que** l'unité de retrait d'arête (12) comprend au moins un mécanisme de traction (26) agencé sur au moins un bras (27), où le au moins un bras présente un certain nombre de moyens de positionnement flexibles (29, 30, 31, 32, 33) et le au moins un mécanisme de traction (26) comprend le au moins un tambour rotatif (28), et l'appareil (8) comprend en outre un dispositif de balayage combiné (10) avant l'unité de retrait d'arête (12), où le dspositif de balayage combiné (10) comprend au moins une unité de positionnement (17) et une unité de détection d'arête (18) pour détecter au moins une zone sélective du filet de salmonidé (6) avec des arêtes (2), et entre le dispositif de balayage combiné (10) et l'unité de retrait d'arête (12), l'appareil (8) comprend une unité de réglage de température (11) configurée pour effectuer un chauffage commandé de la au moins une zone sélective du filet de salmonidé (6) pour attendrir la chair de poisson autour des arêtes (2), en permettant ainsi un retrait d'arête d'un poisson frais et avant rigidification par le au moins un tambour rotatif.

2. Appareil de retrait d'arête de poisson frais et avant rigidification selon la revendication 1, **caractérisé en ce que** l'unité de réglage de température commandée (11) comprend soit une unité à micro-ondes (19), soit une unité à infrarouges (39), soit une unité à laser (20), soit une unité d'injection de vapeur (40), soit une unité d'injection d'eau chaude (41).

3. Appareil de retrait d'arête de poisson frais et avant rigidification selon la revendication 1 ou 2, **caractérisé en ce que** l'unité de réglage de température (11) est une unité d'injection de vapeur (40) ou une unité d'injection d'eau chaude (41) sur laquelle des aiguilles d'injection (42, 42a) sont agencées et où l'unité d'injection (40, 41) est montée sur un bras de robot (21, 27).

4. Appareil de retrait d'arête de poisson frais et avant rigidification selon l'une quelconque des revendications 1 à 3, **caractérisé en ce que** l'unité de positionnement (17) est une unité de balayage de surface 3D (17a) et **en ce que** l'unité de détection d'arête (18) est une unité à rayons x (18a).

5. Appareil de retrait d'arête de poisson frais et avant rigidification selon l'une quelconque des revendications 1 à 3, **caractérisé en ce que** l'unité de positionnement (17) est une unité de balayage de surface 3D (17a) et **en ce que** l'unité de détection d'arête (18) est une unité de balayage MR (18b).

6. Appareil de retrait d'arête de poisson frais et avant rigidification selon l'une quelconque des revendications 1 à 5, **caractérisé en ce qu'**au moins une parmi l'unité de réglage de température (11), l'unité de retrait d'arête (12) ou le dispositif de balayage combiné (10) comprend des caissons (15, 34) avec des moyens d'auto-nettoyage.

7. Appareil de retrait d'arête de poisson frais et avant rigidification selon la revendication 6, **caractérisé en ce que** les caissons à nettoyage intérieur automatisé (15, 34) comprennent des rampes de pulvérisation mobiles et/ou fixes (35).

8. Appareil de retrait d'arête de poisson frais et avant rigidification selon l'une quelconque des revendications 6 à 7, **caractérisé en ce que** les caissons à nettoyage intérieur automatisé (15, 34) comprennent en outre une section inférieure inclinée (36).

9. Appareil de retrait d'arête de poisson frais et avant rigidification selon l'une quelconque des revendications 1 à 8, **caractérisé en ce que** le transporteur (5) est configuré pour déplacer les filets (6) vers l'avant dans un flux, où il est entendu qu'un flux est à la fois considéré comme étant des étapes pouvant être commandées ou un déplacement continu vers l'avant, où les filets sont en mouvement à la fois par étapes/en déplacement continu.

10. Appareil de retrait d'arête de poisson frais et avant rigidification selon l'une quelconque des revendications 1 à 9, **caractérisé en ce que** l'unité de réglage de température (11) est configurée pour effectuer un chauffage commandé depuis n'importe quel côté du filet (6) sélectionné parmi le dessus, le dessous, l'avant, l'arrière ou les côtés du filet (6).

11. Appareil de retrait d'arête de poisson frais et avant rigidification selon l'une quelconque des revendications 1 à 10, **caractérisé en ce que** l'unité de réglage de température (11) est configurée pour effectuer un chauffage commandé à partir d'au moins un angle par rapport à la surface du filet (6).
